# FASCICULE DE BREVET EUROPEEN

(11) **EP 3 898 214 B1**
(45) Date de publication et mention de la délivrance du brevet: **06.09.2023**
(21) Numéro de dépôt: 19845609.7
(22) Date de dépôt: 18.12.2019
(51) Int. Cl.: B29D 30/24, B29D 30/32

(54) **TAMBOUR ET PROCÉDÉ DE FABRICATION D'UNE ÉBAUCHE DE PNEUMATIQUE**
TROMMEL UND VERFAHREN ZUR HERSTELLUNG EINES ROHREIFENS
DRUM AND PROCESS FOR THE MANUFACTURE OF A GREEN TIRE

(30) Priorité: 20.12.2018 FR 1873555; 31.01.2019 FR 1900895
(43) Date de publication de la demande: 27.10.2021
(73) Titulaire: Compagnie Générale des Etablissements Michelin, 63000 Clermont-Ferrand (FR)
(72) Inventeur: GUY, Thomas, 63040 CLERMONT-FERRAND CEDEX 9 (FR); DEBOEUF, Michel, 63040 CLERMONT-FERRAND CEDEX 9 (FR); ROTY, Gael, 63040 CLERMONT-FERRAND CEDEX 9 (FR)
(74) Mandataire: Redouté, Gilles Pierre
(86) Numéro de dépôt international: PCT/FR2019/053144
(87) Numéro de publication internationale: WO 2020/128320

(56) Documents cités:
- EP-A1- 1 623 819
- EP-A2- 1 162 056
- US-A- 3 745 085
- US-A- 5 405 484

## Description

L'invention se rapporte à la fabrication de pneumatiques comprenant une armature de carcasse dont les éléments de renfort sont radiaux dans les flancs et présentent un angle oblique par rapport à la direction circonférentielle dans le sommet ou les bourrelets du pneumatique.

Plus particulièrement, l'invention concerne un tambour de fabrication d'ébauche de pneumatique et un procédé mettant en oeuvre un tel tambour.

Un pneumatique est partagé en trois zones distinctes comprenant un sommet qui comporte notamment une armature de sommet et une bande de roulement destinée à entrer en contact avec le sol, des bourrelets destinés à assurer l'accrochage du pneumatique sur la jante d'une roue, et des flancs destinés à relier le sommet aux bourrelets.

Afin de relier le sommet aux bourrelets, un pneumatique comprend généralement une armature renforcée, formant une carcasse, dont les éléments de renforts sont composés de tronçons de fils métalliques noyés dans une matrice élastomérique vulcanisée. Les tronçons de fils présentent généralement un angle de 90° avec la direction circonférentielle du pneumatique. Une telle armature est appelée "armature de carcasse radiale".

Toutefois, l'armature de carcasse radiale contribue de manière superflue aux performances attendues du pneumatique dans la zone sommet. Il est alors possible de substituer un élément de l'armature de sommet par une armature de carcasse sous réserve que les tronçons de fil de l'armature de carcasse présentent, dans la zone sommet du pneumatique, un angle généralement compris entre 10° et 40° avec la direction circonférentielle du pneumatique, équivalent à celui de l'élément de l'armature de sommet substituée.

Pour fabriquer un tel pneumatique, on dispose successivement et circonférentiellement des éléments prenant la forme de tringles, de bandes ou de nappes sur un tambour de fabrication d'ébauche de pneumatique de forme cylindrique. L'élément d'une ébauche de pneumatique qui forme l'armature de carcasse du pneumatique est appelé nappe carcasse. Les tronçons de fil de la nappe carcasse présentent un angle donné avec la direction longitudinale de la nappe posée à plat, permettant l'obtention ultérieure de l'angle souhaité dans l'armature de carcasse dans la zone sommet du pneumatique.

Ensuite, on transforme l'ébauche de pneumatique de forme cylindrique en ébauche de pneumatique de forme toroïdale, pendant une étape appelée conformation. Lors de cette transformation, on étire le sommet de l'ébauche de manière à en augmenter le diamètre, par mise sous pression d'air du volume délimité par l'ébauche et le tambour, et on rapproche axialement les bourrelets de l'ébauche.

En outre, afin que les éléments de renfort de l'ébauche deviennent radiaux dans les flancs ou, autrement dit, que les éléments de renfort se radialisent, un bourrelet de l'ébauche doit être mobile en rotation par rapport à l'autre bourrelet.

La demande de brevet EP1623819 au nom des demanderesses tente d'apporter une solution à ce problème en proposant un tambour de fabrication d'ébauches de pneumatiques comprenant un fût s'étendant axialement et deux flasques montés mobiles en translation le long du fût, et en rotation autour du fût. Chaque flasque comprend notamment des actionneurs aptes à maintenir un bourrelet de l'ébauche. Au moins un des flasques est mobile en rotation autour du fût sous l'action d'un système d'entrainement motorisé logé dans ledit flasque, de manière à permettre la radialisation des éléments de renfort.

Toutefois, l'intégration d'un système motorisé afin d'entrainer en rotation un flasque est une solution coûteuse et encombrante.

En outre, un flasque comporte des actionneurs devant être alimentés en air comprimé. L'air comprimé est amené depuis une alimentation en air comprimé, appartenant à un ensemble fixe, jusqu'aux actionneurs, appartenant à chaque flasque mobile en rotation, par des flexibles. Les flexibles présentent l'inconvénient de limiter le débattement angulaire du flasque en rotation autour du fût.

Enfin, la limitation du débattement angulaire du flasque impose de le repositionner angulairement à chaque cycle de fabrication d'une ébauche, ce qui est contraignant.

Un objectif de l'invention est de remédier aux inconvénients précités et d'apporter une solution originale, peu coûteuse et d'encombrement réduit afin de permettre l'alimentation en air comprimé des actionneurs montés sur un flasque mobile en rotation, sans limiter le débattement angulaire dudit flasque et sans être contraint de repositionner angulairement ledit flasque à chaque cycle.

Cet objectif est atteint par l'invention qui propose un tambour de fabrication d'une ébauche de pneumatique comprenant un fût s'étendant axialement, deux flasques mobiles en translation axiale le long du fût, et des moyens d'alimentation en air comprimé, chaque flasque comportant au moins un effecteur pneumatique coopérant avec l'ébauche de pneumatique, le tambour étant caractérisé en ce qu'au moins un flasque comprend une première couronne, radialement interne, mobile en translation axiale le long du fût, et une seconde couronne comportant le ou les effecteurs pneumatiques, radialement externe, mobile en rotation autour de la première couronne au moyen d'au moins deux liaisons pivots étanches à l'air, les couronnes et les liaisons pivots délimitant au moins une chambre étanche, et en ce que ledit flasque comprend au moins une première voie de circulation d'air comprimé, un premier tronçon de la première voie appartenant à la première couronne étant reliée à une de ses extrémités aux moyens d'alimentation en air comprimé et à l'autre de ses extrémités à la chambre étanche, et un second tronçon de la première voie appartenant à la seconde couronne étant relié à une de ses extrémité à la chambre étanche et à l'autre de ses extrémités à l'effecteur pneumatique.

L'étanchéité à l'air des liaisons pivots permet la création d'une chambre étanche de forme torique, utilisée comme voie de circulation d'air comprimé. Ainsi, un tronçon de voie appartenant à la première couronne et débouchant dans la chambre étanche communique avec un autre tronçon de voie appartenant à la seconde couronne et débouchant également dans la chambre étanche, permettant ainsi de s'affranchir de la limitation du débattement angulaire et de la contrainte de repositionnement angulaire du flasque de l'état de la technique.

Lors de la fabrication d'une ébauche de pneumatique et, plus précisément, lors de la conformation de l'ébauche, on met sous pression d'air le volume délimité par l'ébauche et le tambour. L'ébauche exerce ainsi un effort axial important sur les flasques jusqu'à 40 kN, pour une pression d'air de 0,5 bar dans ledit volume, devant être transmis de la seconde à la première couronne. Les deux liaisons pivots permettent une bonne transmission de l'effort axial.

De préférence, les deux liaisons pivots comportent chacune un roulement à billes à contact oblique, monté de manière à former un montage dit « en O ». Les roulements à billes constituent une solution économique et d'encombrement réduit par comparaison avec les moyens d'entrainement logés dans les flasques de l'état de la technique. De plus, les roulements à billes à contact oblique présentent l'avantage d'une excellente transmission des efforts axiaux.

De préférence, les liaisons pivots comportent chacune un joint d'étanchéité à l'air en une partie, prenant la forme d'une bague ajustée entre la première et la seconde couronne. Un tel joint permet de garantir une bonne étanchéité de la chambre étanche tout en minimisant les frictions entre les deux couronnes.

Avantageusement, le tambour comprend des moyens d'entrainement pour la translation axiale des flasques, lesdits moyens d'entrainement comprenant des doigts de transmission, chaque doigt de transmission étant fixé à un flasque et mobile en translation axiale le long d'une rainure du fût. Les doigts de transmission constituent une solution simple et compacte pour la transmission des efforts axiaux entre l'intérieur et l'extérieur du fût.

Avantageusement, au moins un des doigts de transmission est fixé à la première couronne et comporte un troisième tronçon de la première voie relié à une de ses extrémités aux moyens d'alimentation en air comprimé et à l'autre de ses extrémités au premier tronçon de la première voie.

Les tambours comportant un flasque entrainé en translation axiale sur le fût au moyen d'un doigt de transmission présente l'avantage de fournir un moyen simple d'alimenter en air comprimé un dispositif pneumatique par l'intermédiaire dudit doigt. La construction d'un tambour est ainsi simplifiée. De plus, l'alimentation d'un dispositif extérieur au fût depuis l'intérieur du fût présente l'avantage d'éviter les interférences entre des flexibles pneumatiques et des ensembles mobiles.

De préférence, les moyens d'alimentation en air comprimé comprennent une alimentation principale reliée à la première voie par l'intermédiaire d'un flexible pneumatique. Le flexible pneumatique est enroulé en spirale à l'intérieur du fût de manière à se déformer de façon ordonnée lors des déplacements axiaux des doigts de transmission, .à la manière d'un ressort de traction.

Avantageusement, les moyens d'entrainement comprennent une tige et deux écrous, ladite tige s'étendant axialement, étant mobile en rotation axiale, et comportant deux tronçons filetés de pas opposés, chaque écrou étant mobile à coulissement sensiblement symétriquement par rapport à l'autre écrou le long d'un des deux tronçons, chaque doigt de transmission étant fixé à un écrou. Un système vis-écrou est un moyen d'entrainement compact et précis pour la translation axiale et symétrique des flasques.

Avantageusement, le ou les effecteurs pneumatiques d'un flasque comprennent un dispositif de maintien apte à maintenir un bourrelet de l'ébauche de pneumatique et à former un contact étanche à l'air avec ledit bourrelet. Ainsi, le volume délimité par l'ébauche de pneumatique et le tambour est étanche à l'air comprimé jusqu'à 0,5 bar, et il n'est plus nécessaire de recourir au gonflage d'une membrane souple pour le mettre sous pression, ce qui simplifie la construction du tambour et élargit son aptitude à fabriquer des ébauches de dimensions différentes.

Avantageusement, le ou les flasques comprennent des moyens de freinage pour le blocage en rotation de la seconde couronne.

Lors de la conformation de l'ébauche, l'étirement du sommet de l'ébauche provoque des tensions dans les éléments de renfort du flanc. Ces tensions tendent à radialiser les éléments de renfort et à faire tourner les bourrelets autour du ou des flasques. La rotation des bourrelets étant bloquée par le ou les dispositifs de maintien, la seconde couronne, libre en rotation autour de la première couronne, pivote et permet la radialisation. Toutefois, en l'absence de système d'entrainement motorisé apte à faire tourner ou bloquer en rotation la seconde couronne, il est nécessaire de mettre en oeuvre des moyens de freinage.

Avantageusement, les moyens de freinage comprennent un joint gonflable disposé dans la chambre étanche, ledit flasque comprenant une seconde voie de circulation d'air comprimé, un premier tronçon de la seconde voie appartenant à la première couronne étant relié à une de ses extrémités aux moyens d'alimentation en air comprimé, et à une autre de ses extrémités au joint gonflable.

Le joint gonflable est actionné par l'air circulant par la seconde voie d'alimentation. Le joint en cours de gonflage s'expanse entre les couronnes et bloque la rotation de la seconde couronne par friction, à la manière d'un frein. Un joint gonflable est un moyen simple et efficace de bloquer la rotation de la seconde couronne d'un flasque.

De préférence, le joint gonflable est de forme torique, et la surface extérieure du joint est adhésive afin de favoriser le blocage en rotation de la seconde couronne.

Avantageusement, les voies destinées à la circulation d'air comprimé sont noyées dans les couronnes et les doigts. Ainsi les couronnes et les doigts de transmission présentent un encombrement réduit et s'intègre facilement dans l'assemblage du tambour.

De préférence, les couronnes et les doigts de transmission sont monoblocs et les voies sont obtenues par perçage. Une telle construction confère une bonne résistance aux couronnes et aux doigts de transmission.

En outre, l'invention a pour objet un procédé de maintien d'une ébauche de pneumatique utilisant un tambour de fabrication d'ébauche de pneumatique selon l'invention, comprenant l'étape suivante :
- on maintient les bourrelets de l'ébauche en alimentant en air comprimé les dispositifs de maintien à l'aide des moyens d'alimentation en air comprimé.

Enfin, l'invention a pour objet un procédé de fabrication d'une ébauche de pneumatique comprenant les étapes suivantes :
- après avoir préalablement fabriqué une ébauche de pneumatique de forme cylindrique, on bloque la rotation de la ou des secondes couronnes du tambour de fabrication, en actionnant les moyens de freinage,
- on maintient l'ébauche de pneumatique, selon un procédé de maintien selon la revendication précédente,
- on étire le sommet de l'ébauche de manière à en augmenter le diamètre, par mise sous pression d'air du volume délimité par l'ébauche et le tambour, et on rapproche axialement les bourrelets de l'ébauche, à l'aide du tambour de fabrication,
- simultanément au rapprochement axial des bourrelets de l'ébauche de pneumatique, on libère la rotation de la ou des secondes couronnes en n'actionnant pas les moyens de freinage.

L'invention sera mieux comprise grâce à la suite de la description qui s'appuie sur les figures suivantes :
- la figure 1 est une vue en perspective et en coupe radiale partielle d'un tambour de fabrication d'ébauche de pneumatique selon l'invention ;
- la figure 2 est vue en coupe radiale de certains éléments de la figure 1.

Sur les différentes figures, les éléments identiques ou similaires portent la même référence. Leur description n'est donc pas systématiquement reprise.

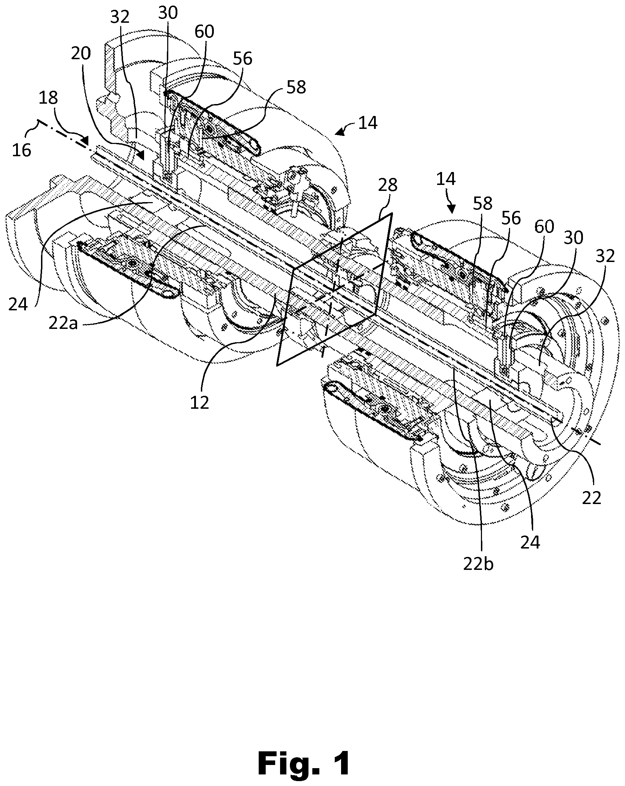

La figure 1 illustre un tambour de fabrication 10 d'ébauche de pneumatique comprenant un bâti prenant la forme d'un boitier (non représenté), un fût 12 de forme cylindrique et deux flasques 14. Le fût s'étend axialement depuis le boitier, et est monté mobile en rotation axiale par rapport au boîtier. Les deux flasques sont montés autour du fût, et sont mobiles en translation axiale le long du fût.

Par « axial » ou « axialement », on fait référence à une direction parallèle à l'axe 16 autour duquel le fût 12 est mobile en rotation, ou à un plan perpendiculaire audit axe.

Par « radial » ou « radialement », on fait référence à une direction ou à un plan comprenant l'axe 16 de rotation du fût.

Le tambour comprend, en outre, des moyens d'entrainement 18 pour la translation axiale des flasques 14. Les moyens d'entrainement comprennent un moteur disposé dans le boitier et un système vis-écrou 20 logé dans le fût 12 et le boitier.

Le système vis-écrou 20 comprend une tige 22 et deux écrous 24. La tige s'étend axialement et, de préférence, coaxialement à l'axe 16 autour duquel le fût 12 est mobile en rotation. La tige est montée mobile en rotation axiale par rapport au boitier et entrainée en rotation par le moteur. La tige comporte deux tronçons 22a, 22b filetés de pas opposés, chaque écrou est mobile à coulissement sensiblement symétriquement par rapport à l'autre écrou le long d'un des deux tronçons. Par sensiblement symétriquement, on entend que les deux écrous se situent à la même distance d'un plan médian 26 du tambour et de l'ébauche de pneumatique avec une précision de 0,5 mm.

Chaque écrou 24 comprend au moins un doigt de transmission 30 relié à un flasque 14. Chaque doigt de transmission s'étend radialement depuis l'écrou jusqu'à un flasque au travers du fût 12, et est fixé à l'écrou et au flasque. Par conséquent, chaque doigt est mobile à coulissement axiale. Chaque doigt coopère avec une rainure 32 du fût s'étendant axialement, de telle manière que lorsque la tige 22 est entrainée en rotation par le moteur, le doigt 30 est mobile en translation axiale le long de la rainure 32. Par conséquent, le flasque 14 est mobile en translation axiale le long du fût 12. De préférence, un flasque comprend deux doigts de transmission reliés à un flasque afin de permettre une bonne transmission des efforts axiaux entre les moyens d'entrainement 18 et les flasques.

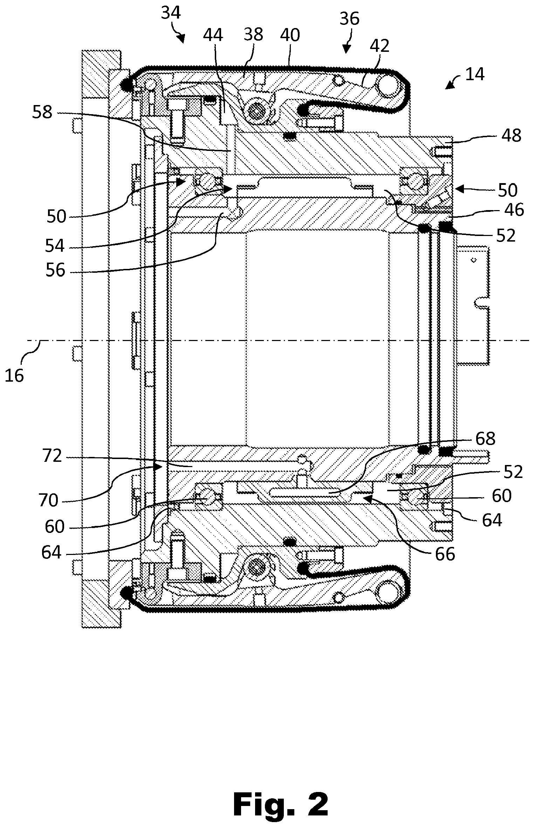

La figure 2 illustre plus particulièrement un flasque 14. Chaque flasque comporte au moins un effecteur pneumatique 34 coopérant avec l'ébauche de pneumatique. Par ailleurs, le tambour comprend des moyens d'alimentation (non représentés) en air comprimé destinés à alimenter en air comprimé le ou les effecteurs pneumatiques 34.

A titre d'exemple, un effecteur pneumatique comprend un dispositif de retournement des rebords de la nappe carcasse autour d'une tringle comportant des bras disposés circonférentiellement autour du flasque, et mobiles à pivotement par rapport à la direction circonférentielle.

De préférence, le ou les effecteurs pneumatiques 34 comprennent un dispositif de maintien 36 apte à maintenir un bourrelet de l'ébauche de pneumatique et à former un contact étanche à l'air avec ledit bourrelet. Ainsi, le volume délimité par l'ébauche de pneumatique et le tambour 10 est étanche à l'air. Le dispositif de maintien comprend des leviers 38 disposés circonférentiellement autour du flasque 14, mobiles à pivotement par rapport à la direction circonférentielle, et une membrane souple 40 formant une enveloppe radialement externe des leviers. Chaque levier comprend une gorge 42 formant avec les autres leviers une gorge circonférentielle apte à loger le bourrelet. La membrane souple 40 permet la formation d'un contact étanche à l'air avec le bourrelet. La gorge 42 permet la mise et le maintien en position axiale d'un bourrelet.

Chaque levier 38 est mobile entre une première position de maintien du bourrelet, et une seconde position dans laquelle le bourrelet n'est pas maintenu. Un levier passe de la seconde à la première position en pivotant par l'action d'un piston 44. Le pivotement des leviers entrainent l'expansion radiale de la membrane souple 40. Le piston est mobile en translation radiale par l'action de l'air comprimé provenant des moyens d'alimentation en air comprimé. Le levier 38 passe de la première à la première seconde position par l'action du retrait radial élastique de la membrane souple 40, et d'un ressort circonférentiel logé dans la gorge 42 des leviers 38.

Selon l'invention, au moins un flasque 14 comprend une première couronne 46, radialement interne, mobile en translation axiale le long du fût, et une seconde couronne 48 comportant le ou les effecteurs pneumatiques 34, radialement externe, mobile en rotation autour de la première couronne au moyen d'au moins deux liaisons pivots 50 étanches à l'air, les couronnes et les liaisons pivots délimitant au moins une chambre étanche 52. L'étanchéité à l'air des liaisons pivots permet la création d'une chambre étanche de forme torique, utilisée comme voie de circulation d'air comprimé. De préférence, le tambour comprend deux flasques selon l'invention.

En outre, ledit flasque comprend au moins une première voie 54 de circulation d'air comprimé. Une voie de circulation d'air comprimé comprend plusieurs tronçons. Un premier tronçon 56 de la première voie appartenant à la première couronne est reliée à une de ses extrémités aux moyens d'alimentation en air comprimé et à l'autre de ses extrémités à la chambre étanche 52, et un second tronçon 58 de la première voie appartenant à la seconde couronne étant relié à une de ses extrémité à la chambre étanche 52 et à l'autre de ses extrémités à l'effecteur pneumatique 34. Ainsi, un tronçon de voie appartenant à la première couronne et débouchant dans la chambre étanche communique avec un autre tronçon de voie appartenant à la seconde couronne et débouchant également dans la chambre étanche.

De préférence, au moins un des doigts de transmission 30 est fixé à la première couronne, et comporte un troisième tronçon 60 (figure 1) de la première voie 54 relié, à une de ses extrémités, aux moyens d'alimentation en air comprimé et, à l'autre de ses extrémités, au premier tronçon 56 de la première voie. Le doigt de transmission permet l'alimentation du dispositif de maintien 36, extérieur au fût, depuis l'intérieur du fût.

De préférence, les moyens d'alimentation en air comprimé comprennent une alimentation principale reliée à la première voie 54 par l'intermédiaire d'un flexible pneumatique (non représenté). Le flexible pneumatique est enroulé en spirale à l'intérieur du fût de manière à se déformer de façon ordonnée lors des déplacements axiaux des doigts de transmission 30.

Les tronçons de voies reliés entre eux forment une voie de circulation étanche à l'air comprimé jusqu'à 8 bar et, de préférence, 5 bar.

A titre d'exemple, les liaisons pivots 50 comprennent des liaisons du type arbre-palier lisse, ou encore, des roulements à billes. De préférence, les roulements à billes sont des roulements à billes à contact obliques 62 permettant une bonne transmission des efforts axiaux.

Les liaisons pivots 50 comportent chacune un joint 64 d'étanchéité à l'air. A titre d'exemple, le joint est en une ou plusieurs parties. De préférence, le joint 64 est en une partie prenant la forme d'une bague ajustée entre la première et la seconde couronne de manière à obtenir un contact étanche à l'air comprimé jusqu'à 8 bar, et minimiser les frictions. Le joint est solidaire de la seconde couronne 48, formant ainsi une étanchéité statique avec la seconde couronne et une étanchéité dynamique avec la première couronne 46. Les joints 64 sont montés coaxialement aux roulements à billes à contact oblique 60. De préférence, les joints tournants sont montés axialement externes par rapport aux roulements de manière à faciliter leur accessibilité.

Le ou les flasques 14 selon l'invention, comprennent des moyens de freinage 66 pour le blocage en rotation de la seconde couronne 48. Les moyens de freinage comprennent un joint gonflable 68 disposé dans la chambre étanche 52. Le flasque comprend une seconde voie 70 de circulation d'air comprimé, un premier tronçon 72 de la seconde voie, appartenant à la première couronne 46, étant relié à une de ses extrémités aux moyens d'alimentation en air comprimé, et à une autre de ses extrémités au joint gonflable 68, via la chambre étanche 52. Le joint gonflable prend une forme torique, et est réalisé dans un matériau élastomérique. De préférence, la surface extérieure du joint gonflable est adhésive.

Le joint gonflable 68 est actionné par l'air circulant par la seconde voie 70 d'alimentation. Le joint en cours de gonflage se comprime entre les couronnes et bloque la rotation de la seconde couronne 48 par friction, à la manière d'un frein.

Les tronçons 56, 58, 60, 72 des voies de circulation d'air comprimé 54, 70 sont noyées dans les couronnes 46, 48 et les doigts de transmission 30. Ainsi les couronnes et les doigts de transmission présentent un encombrement réduit et s'intègrent facilement dans l'assemblage du tambour 10.

Les couronnes et les doigts de transmission sont réalisés dans un matériau rigide, tel l'acier, l'aluminium ou la résine, et sont monoblocs. Les tronçons des voies de circulation d'air comprimé sont obtenus par perçage.

Le tambour de fabrication 10 est utilisé dans un procédé de fabrication d'ébauches de pneumatique.

On fabrique préalablement une ébauche de pneumatique de forme cylindrique.

On bloque la rotation de la ou des secondes couronnes 48 du tambour de fabrication 10 selon l'invention, en actionnant les moyens de freinage 66, on installe l'ébauche de pneumatique sur le tambour de fabrication 10, puis on maintient les bourrelets de l'ébauche de pneumatique en alimentant en air comprimé les dispositifs de maintien 36.

On transforme l'ébauche de pneumatique de forme cylindrique en ébauche de pneumatique de forme toroïdale, pendant une étape appelée conformation. Lors de cette transformation, on étire le sommet de l'ébauche de manière à en augmenter le diamètre, par mise sous pression d'air du volume délimité par l'ébauche et le tambour, et on rapproche axialement les bourrelets de l'ébauche.

Simultanément au rapprochement axial des bourrelets de l'ébauche de pneumatique, on libère la rotation de la ou des secondes couronnes 48 en n'actionnant pas les moyens de freinage 66.

On dispose circonférentiellement la bande de roulement du pneumatique sur le sommet de l'ébauche de pneumatique.

D'autres variantes et modes de réalisation de l'invention peuvent être envisagés sans sortir du cadre de ces revendications.

## Revendications

1. Tambour de fabrication (10) d'une ébauche de pneumatique comprenant un fût (12) s'étendant axialement, deux flasques (14) mobiles en translation axiale le long du fût, et des moyens d'alimentation en air comprimé, chaque flasque comportant au moins un effecteur pneumatique (34) coopérant avec l'ébauche de pneumatique, au moins un flasque (14) comprenant une première couronne (46), radialement interne, mobile en translation axiale le long du fût, et une seconde couronne (48) comportant le ou les effecteurs pneumatiques, radialement externe, le tambour étant **caractérisé en ce que** la seconde couronne (48) est mobile en rotation autour de la première couronne (46) au moyen d'au moins deux liaisons pivots (50) étanches à l'air, les couronnes et les liaisons pivots délimitant au moins une chambre étanche (52), et **en ce que** ledit flasque comprend au moins une première voie de circulation (54) d'air comprimé, un premier tronçon (56) de la première voie appartenant à la première couronne étant reliée à une de ses extrémités aux moyens d'alimentation en air comprimé et à l'autre de ses extrémités à la chambre étanche (52), et un second tronçon (58) de la première voie appartenant à la seconde couronne (48) étant relié à une de ses extrémité à la chambre étanche (52) et à l'autre de ses extrémités à l'effecteur pneumatique (34).

2. Tambour selon la revendication précédente comprenant des moyens d'entrainement (18) pour la translation axiale des flasques (14), lesdits moyens d'entrainement comprenant des doigts de transmission (30), chaque doigt de transmission étant fixé à un flasque et mobile en translation axiale le long d'une rainure (32) du fût (12).

3. Tambour selon la revendication précédente dans lequel au moins un des doigts de transmission (30) est fixé à la première couronne (46) et comporte un troisième tronçon (60) de la première voie (54) relié à une de ses extrémités aux moyens d'alimentation en air comprimé et à l'autre de ses extrémités au premier tronçon (56) de la première voie.

4. Tambour selon l'une des revendications 2 et 3 dans lequel les moyens d'entrainement comprennent une tige (22) et deux écrous (24), ladite tige s'étendant axialement, étant mobile en rotation axiale, et comportant deux tronçons filetés (22a, 22b) de pas opposés, chaque écrou étant mobile à coulissement sensiblement symétriquement par rapport à l'autre écrou le long d'un des deux tronçons, chaque doigt de transmission (30) étant fixé à un écrou.

5. Tambour selon l'une des revendications précédentes dans lequel le ou les effecteurs pneumatiques (34) comprennent un dispositif de maintien (36) apte à maintenir un bourrelet de l'ébauche de pneumatique et à former un contact étanche à l'air avec ledit bourrelet.

6. Tambour selon l'une des revendications précédentes dans lequel le ou les flasques (14) comprennent des moyens de freinage (66) pour le blocage en rotation de la seconde couronne (48).

7. Tambour selon la revendication précédente dans lequel les moyens de freinage (66) comprennent un joint gonflable (68) disposé dans la chambre étanche (52), ledit flasque (14) comprenant une seconde voie de circulation (70) d'air comprimé, un premier tronçon (72) de la seconde voie, appartenant à la première couronne (46), étant relié à une de ses extrémités aux moyens d'alimentation en air comprimé, et à une autre de ses extrémités au joint gonflable (68).

8. Tambour selon l'une des revendications précédentes dans lequel les tronçons (56, 58, 60, 72) des voies de circulation (54, 70) d'air comprimé sont noyés dans les couronnes (46, 48) et les doigts (30).

9. Procédé de maintien d'une ébauche de pneumatique utilisant un tambour de fabrication (10) d'ébauche de pneumatique selon l'une des revendications 5 à 8, comprenant l'étape suivante :
- on maintient les bourrelets de l'ébauche en alimentant en air comprimé les dispositifs de maintien (36) à l'aide des moyens d'alimentation en air comprimé.

10. Procédé de fabrication d'une ébauche de pneumatique comprenant les étapes suivantes :
- après avoir préalablement fabriqué une ébauche de pneumatique de forme cylindrique, on bloque la rotation de la ou des secondes couronnes (48) du tambour de fabrication (10), en actionnant les moyens de freinage (66),
- on maintient l'ébauche de pneumatique, selon un procédé de maintien selon la revendication précédente,
- on étire le sommet de l'ébauche de manière à en augmenter le diamètre, par mise sous pression d'air du volume délimité par l'ébauche et le tambour, et on rapproche axialement les bourrelets de l'ébauche, à l'aide du tambour de fabrication (10),
- simultanément au rapprochement axial des bourrelets de l'ébauche de pneumatique, on libère la rotation de la ou des secondes couronnes (48) en n'actionnant pas les moyens de freinage (66).

## Patentansprüche

1. Trommel (10) zur Herstellung eines Reifenrohlings, welche einen sich axial erstreckenden Schaft (12), zwei Flansche (14), die axial translatorisch entlang des Schaftes beweglich sind, und Mittel zur Versorgung mit Druckluft umfasst, wobei jeder Flansch mindestens einen pneumatischen Effektor (34) aufweist, der mit dem Reifenrohling zusammenwirkt, wobei mindestens ein Flansch (14) einen ersten, radial inneren Kranz (46), der axial translatorisch entlang des Schaftes beweglich ist, und einen zweiten, radial äußeren Kranz (48), der den oder die pneumatischen Effektor(en) aufweist, umfasst, wobei die Trommel **dadurch gekennzeichnet ist, dass** der zweite Kranz (48) mittels mindestens zweier luftdichter Schwenkverbindungen (50) um den ersten Kranz (46) drehbeweglich ist, wobei die Kränze und die Schwenkverbindungen mindestens eine dichte Kammer (52) begrenzen, und dadurch, dass der Flansch mindestens einen ersten Strömungsweg (54) von Druckluft umfasst, wobei ein erstes Teilstück (56) des ersten Weges, das zu dem ersten Kranz gehört, an einem seiner Enden mit den Mitteln zur Versorgung mit Druckluft und an seinem anderen Ende mit der dichten Kammer (52) verbunden ist, und ein zweites Teilstück (58) des ersten Weges, das zu dem zweiten Kranz (48) gehört, an einem seiner Enden mit der dichten Kammer (52) und an seinem anderen Ende mit dem pneumatischen Effektor (34) verbunden ist.

2. Trommel nach dem vorhergehenden Anspruch, welche Antriebsmittel (18) für die axiale Translation der Flansche (14) umfasst, wobei die Antriebsmittel Übertragungsfinger (30) umfassen, wobei jeder Übertragungsfinger an einem Flansch befestigt ist und axial translatorisch entlang einer Nut (32) des Schaftes (12) beweglich ist.

3. Trommel nach dem vorhergehenden Anspruch, wobei mindestens einer der Übertragungsfinger (30) am ersten Kranz (46) befestigt ist und ein drittes Teilstück (60) des ersten Weges (54) aufweist, das an einem seiner Enden mit den Mitteln zur Versorgung mit Druckluft und an seinem anderen Ende mit dem ersten Teilstück (56) des ersten Weges verbunden ist.

4. Trommel nach einem der Ansprüche 2 und 3, wobei die Antriebsmittel eine Stange (22) und zwei Muttern (24) umfassen, wobei sich die Stange axial erstreckt, axial drehbeweglich ist und zwei mit Gewinden mit entgegengesetzten Steigungen versehene Teilstücke (22a, 22b) aufweist, wobei jede Mutter im Wesentlichen symmetrisch bezüglich der anderen Mutter entlang eines der zwei Teilstücke gleitbeweglich ist, wobei jeder Übertragungsfinger (30) an einer Mutter befestigt ist.

5. Trommel nach einem der vorhergehenden Ansprüche, wobei der oder die pneumatische(n) Effektor(en) (34) eine Haltevorrichtung (36) umfassen, die geeignet ist, einen Wulst des Reifenrohlings zu halten und einen luftdichten Kontakt mit dem Wulst herzustellen.

6. Trommel nach einem der vorhergehenden Ansprüche, wobei der oder die Flansche (14) Bremsmittel (66) zum Blockieren der Drehung des zweiten Kranzes (48) umfassen.

7. Trommel nach dem vorhergehenden Anspruch, wobei die Bremsmittel (66) eine aufblasbare Dichtung (68) umfassen, die in der dichten Kammer (52) angeordnet ist, wobei der Flansch (14) einen zweiten Strömungsweg (70) von Druckluft umfasst, wobei ein erstes Teilstück (72) des zweiten Weges, das zu dem ersten Kranz (46) gehört, an einem seiner Enden mit den Mitteln zur Versorgung mit Druckluft und an seinem anderen Ende mit der aufblasbaren Dichtung (68) verbunden ist.

8. Trommel nach einem der vorhergehenden Ansprüche, wobei die Teilstücke (56, 58, 60, 72) der Strömungswege (54, 70) von Druckluft in die Kränze (46, 48) und die Finger (30) eingebettet sind.

9. Verfahren zum Halten eines Reifenrohlings unter Verwendung einer Trommel (10) zur Herstellung eines Reifenrohlings nach einem der Ansprüche 5 bis 8, welches den folgenden Schritt umfasst:
- Die Wülste des Rohlings werden gehalten, indem die Haltevorrichtungen (36) mithilfe der Mittel zur Versorgung mit Druckluft mit Druckluft versorgt werden.

10. Verfahren zur Herstellung eines Reifenrohlings, welches die folgenden Schritte umfasst:
- Nachdem zuvor ein Reifenrohling von zylindrischer Form hergestellt worden ist, wird die Drehung des zweiten Kranzes oder der zweiten Kränze (48) der Trommel zur Herstellung (10) blockiert, indem die Bremsmittel (66) betätigt werden,
- der Reifenrohling wird gemäß einem Verfahren zum Halten nach dem vorhergehenden Anspruch gehalten,
- der Scheitel des Rohlings wird durch Beaufschlagung des von dem Rohling und der Trommel begrenzten Volumens mit Luftdruck so gedehnt, dass sein Durchmesser vergrößert wird, und die Wülste des Rohlings werden mithilfe der Trommel zur Herstellung (10) einander axial genähert,
- gleichzeitig mit der axialen Annäherung der Wülste des Reifenrohlings wird die Drehung des zweiten Kranzes oder der zweiten Kränze (48) freigegeben, indem die Bremsmittel (66) nicht mehr betätigt werden.

## Claims

1. Drum (10) for manufacturing a tyre blank, comprising a shaft (12) extending axially, two flanges (14) movable in axial translation along the shaft, and means for supplying compressed air, each flange comprising at least one pneumatic effector (34) cooperating with the tyre blank, at least one flange (14) comprising a first, radially internal ring (46) movable in axial translation along the shaft, and a second, radially external ring (48) comprising the pneumatic effector(s), the drum being **characterized in that** the second ring (48) is movable in rotation around the first ring (46) by means of at least two airtight pivot connections (50), the rings and the pivot connections delimiting at least one sealed chamber (52), and **in that** said flange comprises at least one first compressed-air circulation channel (54), a first section (56) of the first channel belonging to the first ring being connected at one of its ends to the compressed-air supply means and at the other of its ends to the sealed chamber (52), and a second section (58) of the first channel belonging to the second ring (48) being connected at one of its ends to the sealed chamber (52) and at the other of its ends to the pneumatic effector (34).

2. Drum according to the preceding claim comprising drive means (18) for the axial translation of the flanges (14), said drive means comprising transmission fingers (30), each transmission finger being fixed to a flange and movable in axial translation along a groove (32) of the shaft (12).

3. Drum according to the preceding claim, in which at least one of the transmission fingers (30) is fixed to the first ring (46) and comprises a third section (60) of the first channel (54) connected at one of its ends to the compressed-air supply means and at the other of its ends to the first section (56) of the first channel.

4. Drum according to one of Claims 2 and 3, in which the drive means comprise a rod (22) and two nuts (24), said rod extending axially, being movable in axial rotation, and comprising two threaded sections (22a , 22b) of opposite pitches, each nut being movable to slide substantially symmetrically with respect to the other nut along one of the two sections, each transmission finger (30) being fixed to a nut.

5. Drum according to one of the preceding claims, in which the pneumatic effector(s) (34) comprise a holding device (36) capable of holding a bead of the tyre blank and of forming an airtight contact with said bead.

6. Drum according to one of the preceding claims, in which the flange(s) (14) comprise braking means (66) for rotationally blocking the second ring (48) .

7. Drum according to the preceding claim, in which the braking means (66) comprise an inflatable seal (68) arranged in the sealed chamber (52), said flange (14) comprising a second compressed-air circulation channel (70), a first section (72) of the second channel, belonging to the first ring (46), being connected at one of its ends to the compressed-air supply means, and at another of its ends to the inflatable seal (68).

8. Drum according to one of the preceding claims, in which the sections (56, 58, 60, 72) of the compressed-air circulation channels (54, 70) are embedded in the rings (46, 48) and the fingers (30).

9. Method of holding a tyre blank using a tyre blank manufacturing drum (10) according to one of Claims 5 to 8, comprising the following step:
- holding the beads of the blank by supplying compressed air to the holding devices (36) using the compressed-air supply means.

10. Method for manufacturing a tyre blank comprising the following steps:
- after having previously manufactured a cylindrical-shaped tyre blank, blocking the rotation of the second ring(s) (48) of the manufacturing drum (10) by actuating the braking means (66),
- holding the tyre blank, according to a holding method according to the preceding claim,
- stretching the crown of the blank so as to increase its diameter, by pressurizing the volume delimited by the blank and the drum with air, and axially bringing closer together the beads of the blank, using the manufacturing drum (10),
- simultaneously with the axial bringing closer together of the beads of the tyre blank, freeing the rotation of the second ring(s) (48) by not actuating the braking means (66).
